# EUROPEAN PATENT APPLICATION

(11) **EP 4 793 869 A1**
(43) Date of publication of application: **19.08.2026**
(21) Application number: 24877353.3
(22) Date of filing: 19.06.2024
(51) Int. Cl.: G06Q 50/04, G06Q 50/10, G06V 30/224, G06V 30/41, G06Q 10/10, G06Q 30/06, G06Q 30/04

(54) **SYSTEM AND METHOD FOR REQUESTING, PROCESSING, AND MANAGING DENTAL STRUCTURES ON BASIS OF OCR**

(30) Priority: 12.10.2023 KR 20230136276
(71) Applicant: Q-Click Inc., Seoul 06158 (KR)
(72) Inventor: KIM, Heeyeoun, Yangju-si Gyeonggi-do 11469 (KR)
(74) Representative: Mewburn Ellis LLP
(86) International application number: PCT/KR2024/008448
(87) International publication number: WO 2025/079813

(57) **Abstract**

The present disclosure relates to a system and a method for requesting, processing, and managing dental structures on the basis of OCR. The system according to one aspect of the present disclosure comprises: a first electronic device that recognizes text on a written dental work request on the basis of OCR and transmits a digital dental work request; a server that manages the digital dental work request and transmits the digital dental work request and work information; and a second electronic device that transmits, according to the work information, work completion information with respect to the digital dental work request to the server.

## Description

### [Technical Field]

The present disclosure relates to an electronic device and a method, and more particularly, to a system and method for converting dental lab prescriptions between dental hospitals and/or dental clinics and dental laboratories into digital data using optical character recognition (OCR) technology and requesting and mediating dental lab services.

### [Background Art]

During the process of treating patients, dental clinics recognize the necessity of prostheses, take impressions, etc., and then ship these to dental laboratories. During this process, desired materials, precautions, etc., are communicated via telephone, notes included upon the delivery of impression trays, email, or written dental lab prescription forms. After receiving the impressions, etc., the dental laboratories perform the work of fabricating prostheses with reference to the received precautions. This generally involves the processes of model making, scanning, design, milling, ceramic casting, firing, and policing. Completed prostheses are shipped to the dental clinics. The dental clinics inspect the prostheses, and when modifications are necessary, either make simple adjustments directly or request remakes from the dental laboratories. However, from the dental laboratories' perspective, a single laboratory handles 20 to 100 dental clinics, and daily orders range from 600 to 3000 with average monthly orders reaching thousands to tens of thousands of orders. There may be cases where these precautions transmitted via telephone or in the form of notes are not accurately reflected. Further, since prostheses are sensitive to even slight changes in form, it is difficult to determine responsibility when an abnormality is identified in a finished prosthesis during the treatment process. Materials used for prostheses are becoming increasingly diverse, and with the development of the latest equipment used in manufacturing prostheses, productivity is increasing. Given this current trend, difficulties encountered in managing information on numerous prostheses are growing daily.

### [Disclosure]

### [Technical Problem]

Embodiments disclosed in the present disclosure are directed to building a system for converting dental lab prescriptions between dental hospitals and/or dental clinics and dental laboratories into digital data and requesting and mediating dental lab services.

Objects to be achieved by the present disclosure are not limited to that described above, and other objects that have not been described will be clearly understood by those of ordinary skill in the art from the following description.

### [Technical Solution]

To achieve the above-described purpose, a system according to an aspect of the present disclosure includes a first electronic device configured to recognize characters of a dental lab prescription on the basis of optical character recognition (OCR) of an application program, generate a digital dental lab prescription obtained by digitally converting the dental lab prescription through OCR using the application program, and transmit the digital dental lab prescription using the application program, a server configured to manage the digital dental lab prescription including a hospital name, a patient name, a prosthesis type, a shade, and a tooth position number indicating a position of a tooth, and a second electronic device configured to transmit work completion information for the digital dental lab prescription to the server in accordance with work information.

A method according to another aspect of the present disclosure includes recognizing characters of a dental lab prescription on the basis of OCR of an application program, generating a digital dental lab prescription obtained by digitally converting the dental lab prescription through OCR using the application program, transmitting the digital dental lab prescription using the application program, managing the digital dental lab prescription including a hospital name, a patient name, a prosthesis type, a shade, and a tooth position number indicating a position of a tooth, generating work information on the basis of the digital dental lab prescription, transmitting the digital dental lab prescription and the work information, and transmitting work completion information for the digital dental lab prescription in accordance with the work information.

In addition, a computer program stored in a computer-readable recording medium to perform a method of implementing the present disclosure is provided.

Further, a computer-readable recording medium on which a computer program for performing a method of implementing the present disclosure is recorded is provided.

### [Advantageous Effects]

According to the foregoing technical solutions of the present disclosure, it is possible to build a system for converting dental lab prescriptions between dental hospitals and/or dental clinics and dental laboratories into digital data and requesting and mediating dental lab services and provide convenience to users.

Effects of the present disclosure are not limited to that described above, and other effects that have not been described will be clearly understood by those of ordinary skill in the art from the following description.

### [Description of Drawings]

FIG. 1 is an exemplary diagram of a system according to the present disclosure.
FIG. 2 is an exemplary block diagram of a server of FIG. 1.
FIG. 3 is a block diagram illustrating exemplary functions of a server according to the present disclosure.
FIG. 4 is a view illustrating an embodiment of generating a digital dental lab prescription of the present disclosure.
FIG. 5 is a diagram illustrating optical character recognition (OCR) of an application program according to an embodiment of the present disclosure.
FIG. 6 is a diagram illustrating OCR of an application program according to another embodiment of the present disclosure.
FIG. 7 is a diagram exemplifying an embodiment of the present disclosure in which OCR is implemented using a transformer.
FIGS. 8A, 8B, 9, 10, and 11 are diagrams exemplifying various user interfaces (UIs) provided by an application program of the present disclosure.
FIG. 12 is a flowchart illustrating a method according to the present disclosure.
FIG. 13 is a sequence diagram illustrating a system performing the method according to the present disclosure.

### [Modes of the Invention]

Throughout the present disclosure, the same reference numerals denote the same components. The present disclosure does not describe all elements of embodiments, and general content in the technical field to which the present disclosure pertains or overlapping content between embodiments will not be described. The terms "unit," "module," "member," and "block" used herein may be implemented as software or hardware. Depending on embodiments, a plurality of "units," "modules," "members," and "blocks" may be implemented as one component, or one "unit," "module," "member," and "block" may include a plurality of components.

Throughout the specification, when a part is referred to as being "connected" to another part, this includes not only a case where the part is directly connected to the other part, but also a case where the part is indirectly connected to the other part. The indirect connection includes connection via a wireless communication network.

Further, when a part is referred to as "including" a component, this means that the part may further include other components rather than excluding other components.

Throughout the specification, when a member is located "on" another member, this includes not only a case where the member is in contact with the other member, but also a case where another member exists between the two members.

The terms "first," "second," etc., are only used to distinguish one element from others, and components are not limited by the terms.

Singular forms include the plural forms unless the context clearly indicates otherwise.

An identification numeral of each step is used for convenience of description. The identification numerals do not describe the order of steps, and each step may be performed differently from the specified order unless a specific order is clearly described in the context.

Hereinafter, the operating principles and embodiments of the present disclosure will be described with reference to the accompanying drawings.

In the present specification, the term "device according to the present disclosure" encompasses all types of devices for performing computational processing and providing results to a user. For example, a device according to the present disclosure may encompass all of a computer, a server device, and a portable terminal, or may take the form of any one thereof.

Here, the computer may encompass, for example, a notebook computer, a desktop computer, a laptop computer, a tablet personal computer (PC), a slate PC, etc., on which a web browser is installed.

The server device is a server that communicates with an external device to process information and may encompass an application server, a computing server, a database (DB) server, a file server, a game server, a mail server, a proxy server, a web server, and the like.

The portable terminal is, for example, a wireless communication device ensuring portability and mobility, and may encompass all types of handheld wireless communication devices such as a personal communication system (PCS) terminal, a global system for mobile communications (GSM) terminal, a personal digital cellular (PDC) terminal, a personal handyphone system (PHS) terminal, a personal digital assistant (PDA) terminal, an international mobile telecommunication (IMT)-2000 terminal, a code division multiple access (CDMA)-2000 terminal, a wideband CDMA (WCDMA), a wireless broadband Internet (WiBro) terminal, a smartphone, and the like.

Artificial intelligence (AI)-related functions according to the present disclosure are performed by a processor and a memory. The processor may be one or more processors. Here, the one or more processors may be a general-purpose processor such as a central processing unit (CPU), an application processor (AP), a digital signal processor (DSP), etc., a graphics-dedicated processor such as a graphics processing unit (GPU), a vision processing unit (VPU), etc., or an AI-specific processor such as a neural processing unit (NPU). The one or more processors may perform control to process input data according to a predefined operation rule or AI model stored in the memory. Alternatively, when the one or more processors are AI-dedicated processors, the AI-dedicated processors may be designed as a hardware structure specified for processing a specific AI model. For example, the processor may encompass a microcontroller unit (MCU), an accelerated processing unit (APU), and the like.

The predefined operation rule or AI model is created through training. Here, "created through training" means training a basic AI model using a plurality of pieces of training data on the basis of a training algorithm to acquire the predefined operation rule or AI model that is set to achieve desired characteristics (or purposes). The training may be performed by a device executing AI according to the present disclosure or a separate server and/or system. An example of the training algorithm is, but is not limited to, supervised learning, unsupervised learning, semi-supervised learning, or reinforcement learning.

The AI model may be composed of a plurality of neural network layers. Each of the neural network layers includes a plurality of weight values and performs a neural network computation through computation between a computation result of a previous layer and the plurality of weight values. A plurality of weight values that the plurality of neural network layers have may be optimized on the basis of learning results of the AI model. For example, the plurality of weight values may be updated such that a loss value or a cost value acquired from the AI model during the learning process may be reduced or minimized. An artificial neural network may include a deep neural network (DNN) such as a convolutional neural network (CNN), a DNN, a recurrent neural network (RNN), a restricted Boltzmann machine (RBM), a deep belief network (DBN), a bidirectional recurrent deep neural network (BRDNN), a deep Q-network, etc., but the DNN is not limited thereto.

According to an exemplary embodiment of the present disclosure, the processor may implement AI. AI refers to a machine learning method based on an artificial neural network that enables a machine to learn by mimicking human neurons. Depending on learning methods, AI methodologies may be categorized as supervised learning where features (input data) and labels (output data) are determined because input data and output data are provided together as training data, unsupervised learning where labels (output data) of features (input data) are not determined because only input data is provided without output data, and reinforcement learning where learning is performed to maximize a reward which is given from the environment every time an action is taken in a current state. In addition, AI methodologies may be categorized depending on architectures which are the structures of learning models. Widely used architectures of deep learning technology may be categorized as a CNN, an RNN, a transformer, a generative adversarial network (GAN), and the like.

The device and system may include an AI model. The AI model may be a single AI model or may be implemented as a plurality of AI models. The AI model may be configured as a neural network (or artificial neural network) and may include a statistical learning algorithm that mimics biological neurons in machine learning and cognitive science. The neural network refers to any model with problem-solving capabilities, in which artificial neurons (nodes) connected by synapses modify strength of the synaptic connections through learning. The neurons of the neural network may include a combination of weight values or biases. The neural network may include one or more layers composed of one or more neurons or nodes. For example, the device may include an input layer, a hidden layer, and an output layer. The neural network constituting the device may infer a predictive output from any input by changing the weight values of the neurons through learning.

The processor may generate the neural network, train (or learn) the neural network, perform computation on the basis of received input data, and generate an information signal or retrain the neural network on the basis of the results. Models of the neural network may include, but are not limited to, various kinds of models including a CNN, such as GoogleNet, AlexNet, VGG network, etc., a region with CNN (R-CNN), a region proposal network (RPN), an RNN, a stacking-based deep neural network (S-DNN), a state-space dynamic neural network (S-SDNN), a deconvolution network, a DBN, an RBM, a fully convolutional network, a long short-term memory (LSTM) network, a classification network, and the like. The processor may include one or more processors for performing computation based on models of the neural network. For example, the neural network may include a DNN.

The neural network may encompass a CNN, an RNN, a perceptron, a multilayer perceptron, a feed forward (FF), a radial basis network (RBN), a deep feed forward (DFF), an LSTM, a gated recurrent unit (GRU), an auto encoder (AE), a variational auto encoder (VAE), a denoising auto encoder (DAE), a sparse auto encoder (SAE), a Markov chain (MC), a Hopfield network (HN), a Boltzmann machine (BM), an RBM, a DBN, a deep convolutional network (DCN), a deconvolutional network (DN), a deep convolutional inverse graphics network (DCIGN), a GAN, a liquid state machine (LSM), an extreme learning machine (ELM), an echo state network (ESN), a deep residual network (DRN), a differentiable neural computer (DNC), a neural turning machine (NTM), a capsule network (CN), and an attention network (AN). However, those of ordinary skill in the art should understand that the neural network is not limited thereto and may include any neural network.

According to exemplary embodiment of the present disclosure, the processor may use, but is not limited to, various AI architectures and algorithms including a CNN, such as GoogleNet, AlexNet, VGG network, etc., an R-CNN, an RPN, an RNN, an S-DNN, an S-SDNN, a deconvolution network, a DBN, an RBM, a fully convolutional network, an LSTM network, a classification network, generative modeling, eXplainable AI, continual AI, representation learning, and AI for material design, bidirectional encoder representations from transformers (BERT), sentence piece (SP)-BERT, machine reading comprehension/question answering (MRC/QA), text analysis, a dialog system, Generative Pretrained Transformer (GPT)-3, and GPT-4 for natural language processing, visual analytics, visual understanding, video synthesis, and ResNet for vision processing, anomaly detection, prediction, time-series forecasting, optimization, recommendation, and data creation for data intelligence, and the like. Embodiments of the present disclosure will be described in detail below with reference to the accompanying drawings.

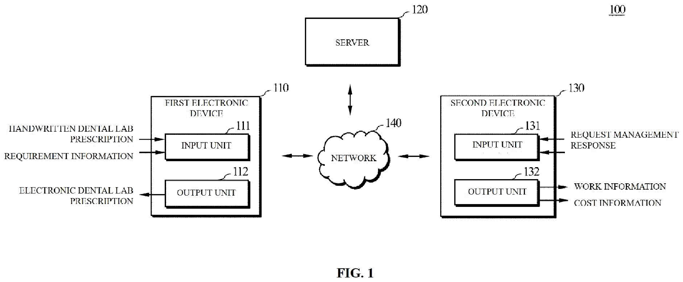

FIG. 1 is an exemplary diagram of a system according to the present disclosure.

Referring to FIG. 1, a system 100 may include a first electronic device 110, a server 120, a second electronic device 130, and a network 140. For example, the first electronic device 110 may be an electronic device used in a dental hospital and/or dental clinic, and the second electronic device 130 may be an electronic device used in a dental laboratory. However, the first electronic device 110 and the second electronic device 130 are not limited thereto.

The first electronic device 110 may execute an application program to recognize characters of a dental lab prescription on the basis of optical character recognition (OCR) of the application program. The application program is executed by an operation system (OS) and may be installed on a system or memory or may provide a service to a user in real time via the web. For example, the application program may be provided by the server 120.

In an exemplary embodiment, the first electronic device 110 may generate a digital dental lab prescription obtained by digitally converting the dental lab prescription through OCR using the application program. The first electronic device 110 may transmit the digital dental lab prescription to the server 120 using the application program. The digital dental lab prescription may be transmitted to the server 120 via the network 140. The digital dental lab prescription may include a hospital name, a patient name, a prosthesis type, a shade, and a tooth position number indicating a position of a tooth.

In an embodiment, the first electronic device 110 may recognize text and numbers of the dental lab prescription on the basis of character positions in accordance with a standard prescription format provided by the application program. This may be referred to as "template-based character recognition method."

In another embodiment, the first electronic device 110 may recognize the text and numbers of the dental lab prescription on the basis of random positions in accordance with an arbitrary prescription format that is not aligned with the standard prescription format, and may determine context on the basis of the recognized text and numbers. This may be referred to as "non template-based character recognition method" or "random position-based character recognition method."

The server 120 may manage the digital dental lab prescription.

In an embodiment, the server 120 may classify the characters in the digital dental lab prescription as clear characters and unclear characters using an AI model for recognizing characters. Also, the server 120 may highlight the unclear characters in the digital dental lab prescription and transmit the highlighted digital dental lab prescription to the first electronic device 110. The highlighted digital dental lab prescription may be transmitted to the first electronic device 110 via the network 140. When the server 120 cannot recognize or classify the unclear characters using the AI model, the server 120 may transmit a corresponding response and information on the corresponding part to the first electronic device 110, and a user who operates the first electronic device 110 may provide feedback to the server 120. In other words, the user who operates the first electronic device 110 may directly highlight unclear points.

In another embodiment, the first electronic device 110 may request dental lab rework from the server using the application program. In this case, the server 120 may provide a quick menu user interface (UI) for attachment adjustment to the first electronic device 110 in response to the request for dental lab rework. The quick menu UI may be executed by the application program and displayed on the first electronic device 110.

In still another embodiment, the server 120 may calculate an OCR error rate on the basis of the digital dental lab prescription. Then, the server 120 may provide an incentive UI based on the OCR error rate to the first electronic device 110. In an exemplary embodiment, a first OCR error rate may be a ratio of unclearly recognized characters to clearly recognized characters in the digital dental lab prescription.

In an exemplary embodiment, a second OCR error rate may be defined as a value obtained by dividing the difference between a ratio of unclearly recognized characters to clearly recognized characters in a specific digital dental lab prescription (hereinafter, "specific error rate") and an average of ratios of unclearly recognized characters to clearly recognized characters in the entire set of individual digital dental lab prescription cases input to the first electronic device 110 (hereinafter, "average error rate") by the average error rate. In other words, the second OCR error rate is given as in Equation 1 below. 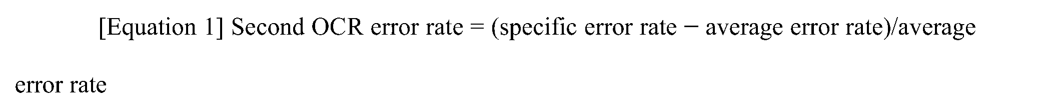Second OCR error rate = (specific error rate - average error rate)/average error rate

According to an exemplary embodiment, the average error rate may be equal to an average first OCR error rate of all digital dental lab prescriptions input to the first electronic device 110. According to an exemplary embodiment, the specific error rate may be equal to a first OCR error rate of any one specific digital dental lab prescription input to the first electronic device 110.

The incentive UI may be executed by the application program and displayed on the first electronic device 110. For example, incentive based on the incentive UI may increase with a reduction in the first OCR error rate. The incentive based on the incentive UI may decrease with an increase in the first OCR error rate.

According to an exemplary embodiment, the first electronic device 110 may assign a higher weight value to incentive based on the second OCR error rate than to incentive based on the first OCR error. For example, the incentive based on the incentive UI may increase more as a result of a reduction in the second OCR error rate than as a result of a reduction in the first OCR error rate. The incentive based on the incentive UI may decrease more as a result of an increase in the second OCR error rate than as a result of an increase in the first OCR error rate.

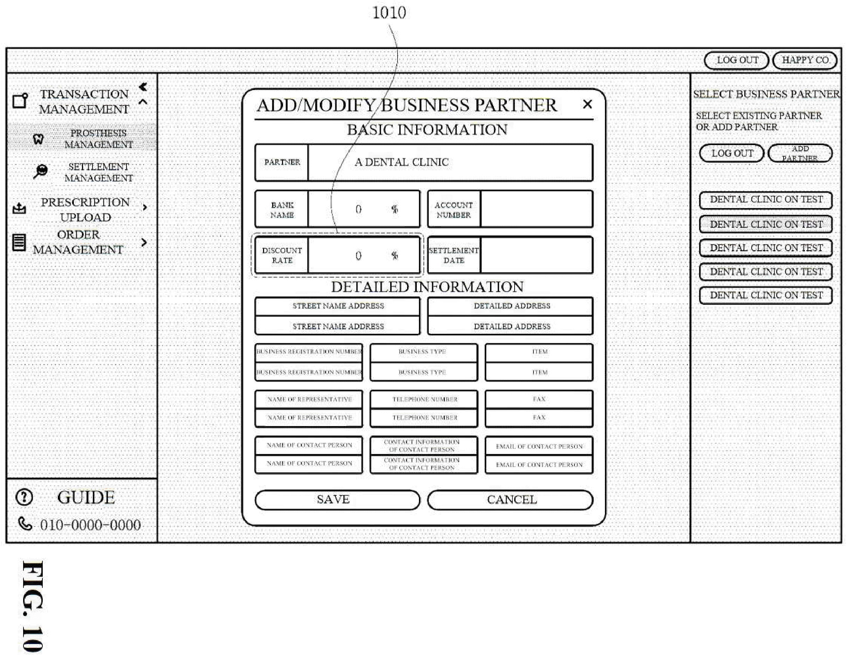

The incentive may be, for example, a discount rate but is not limited thereto. The incentive UI will be described in further detail with reference to FIG. 10.

The server 120 may generate work information on the basis of the digital dental lab prescription. The server 120 may transmit the digital dental lab prescription and the work information to the second electronic device 130. The digital dental lab prescription and the work information may be transmitted to the second electronic device 130 via the network 140.

According to another exemplary embodiment, the server 120 may provide an auction system to adjust the cost of the prosthesis or bid on the cost of the prosthesis. For example, the server 120 may provide an auction system that facilitates bidding, reverse auctions, and/or the like by a plurality of dental laboratories for public tenders issued by dental hospitals and/or dental clinics.

In an embodiment, the first electronic device 110 may upload data about a prescription that requests a plurality of prostheses for a single patient to the application program and transmit a digital dental lab prescription and the uploaded data to the server 120 using the application program. The server 120 may receive the digital dental lab prescription and the uploaded data via the network 140. The server 120 may display separate display UIs corresponding to each of the plurality of prostheses in the digital dental lab prescription and transmit the digital dental lab prescription in which the separate display UIs are displayed to the second electronic device 130. The separate display UIs may be executed by the application program and distinguished by color, layer, or the like.

In another embodiment, the server 120 may provide a portfolio sharing community UI for dental laboratories to upload their work results to the application program, to the second electronic device 130. The portfolio sharing community UI may be executed by the application program and displayed on the second electronic device 130.

In still another embodiment, the server 120 may generate a dedicated chat room UI that enables communication between the first electronic device 110 and the second electronic device 130 in the application program and provide the dedicated chat room UI to each of the first electronic device 110 and the second electronic device 130. The dedicated chat room UI may be executed by the application program and displayed on the first electronic device 110 and the second electronic device 130. A dedicated chat room may be generated only for a case where patients of the dental hospital and the dental laboratory are identical. However, a condition for generating a dedicated chat room is not limited thereto.

In yet another embodiment, the server 120 may provide the portfolio sharing community UI for dental laboratories to upload their work results to the application program, to the second electronic device 130. The portfolio sharing community UI may be executed by the application program.

The second electronic device 130 may receive the digital dental lab prescription and the work information. The second electronic device 130 may transmit work completion information which is a result of completing a lab work for the digital dental lab prescription in accordance with the work information, to the server 120.

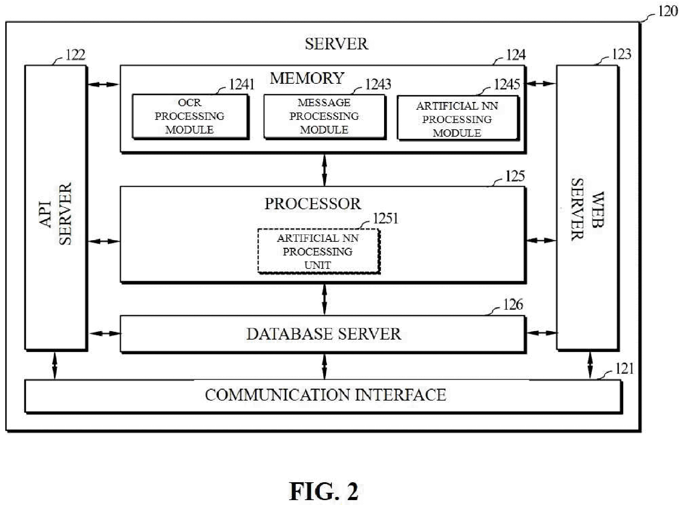

FIG. 2 is an exemplary block diagram of a server of FIG. 1.

Referring to FIG. 2, the server 120 may include a communication interface 121, an application programming interface (API) server 122, a web server 123, a memory 124, a processor 125, and a DB server 126.

The communication interface 121 may include one or more components that enable communication with an external device. For example, the communication interface 121 may include at least one of a wired communication module, a wireless communication module, and a short-range communication module.

The wired communication module may encompass not only various wired communication modules such as a local area network (LAN) module, a wide area network (WAN) module, a value added network (VAN) module, etc., but also a Universal Serial Bus (USB) module, a High Definition Multimedia Interface (HDMI) module, a Digital Visual Interface (DVI) module, a Recommended Standard (RS)-232 module, a power line communication module, or various cable communication modules such as a plain old telephone service (POTS) module, or the like.

The wireless communication module may encompass not only a wireless fidelity (Wi-Fi) module and a wireless broadband (WiBro) module but also wireless communication modules supporting various wireless communication methods such as GSM, CDMA, WCDMA, universal mobile telecommunications system (UMTS), time division multiple access (TDMA), Long Term Evolution (LTE), 4^{th} Generation (4G), 5^{th} Generation (5G), 6^{th} Generation (6G), and the like.

The wireless communication module may include a wireless communication interface including an antenna and a transmitter that transmit a signal. Also, the wireless communication module may further include a signal conversion module that converts a digital control signal output from the processor 110 through the wireless communication interface into a wireless analog signal in accordance with control of the processor 110.

The short-range communication module is intended for short-range communication and may support short-range communication using at least one of Bluetooth^{™}, radio frequency identification (RFID), Infrared Data Association (IrDA), ultra-wideband (UWB), ZigBee, near field communication (NFC), Wi-Fi, Wi-Fi direct, and wireless USB technologies.

The API server 122 may provide interface specifications, that is, an API, for defining an application program programming interface, a series of sub-programs for writing a program in programming, a protocol, etc., for interaction therebetween.

The web server 123 may run web server software or a service program that transmits hypertext markup language (HTML) documents or objects (image files, etc.) requested by a web browser via hypertext transfer protocol (HTTP) or hypertext transfer protocol secure (HTTPS). The web server 123 may include a computer program that receives an HTTP request from a client such as a web browser and returns a webpage such as an HTML document, and/or a computing device that executes the computer program.

The memory 124 may store data supporting various functions of the system 100 and a program for processor operation, store input or output data (e.g., music files, still images, videos, etc.), and store multiple application programs (or applications) run on the system 100 and data and instructions for operation of the system 100. At least some of the application programs may be downloaded from an external server via wireless communication. The memory 124 may include at least one type of storage medium among a flash memory type, a hard disk type, a solid state disk (SSD) type, a silicon disk drive (SDD) type, a multimedia card micro type, a card-type memory (e.g., a secure digital (SD) or extreme digital (XD) memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The memory 124 may include an OCR processing module 1241 including instructions for processing OCR, a message processing module 1243 including instructions for processing various messages, and an artificial neural network processing module 1245 including instructions for executing an artificial neural network.

The processor 125 may include an artificial neural network processing unit 1251 for implementing AI. As described above, AI methodologies may be categorized as supervised learning, unsupervised learning, and reinforcement learning. Architectures of deep learning technology may be categorized as CNN, RNN, transformer, GAN, and the like. The AI model may be one or more AI models. As described above, the processor may generate a neural network, train (or learn) the neural network, perform computation on the basis of received input data, and generate an information signal or retrain the neural network on the basis of the results. Those of ordinary skill in the art should understand that the neural network may include a CNN, an RNN, a perceptron, a multilayer perceptron, etc., but is not limited thereto and may include any neural network. As described above, the processor may use, but is not limited to, various AI architectures and algorithms including a CNN, such as GoogleNet, AlexNet, VGG network, etc., an R-CNN, BERT, SP-BERT, MRC/QA, text analysis, a dialog system, GPT-3, and GPT-4 for natural language processing, visual analytics, visual understanding, video synthesis, and ResNet for vision processing, anomaly detection, prediction, time-series forecasting, optimization, recommendation, and data creation for data intelligence, and the like. A CNN may be structured as a series of alternating pooling layers: convolution layers that apply a plurality of filters to each region of an image to generate feature maps, and pooling layers that spatially integrate the feature maps to extract features that are invariant to changes in position or rotation. Accordingly, it is possible to extract features at various levels, ranging from low-level features such as points, lines, planes, etc., to complex and meaningful high-level features. The convolution layers may calculate feature maps by applying a nonlinear activation function to a product of a filter and a local receptive field for each patch of an input image. Compared to other network architectures, CNNs may be characterized by using a filter that has sparse connectivity and shared weights. This connection structure reduces the number of parameters to be trained and makes training based on a backpropagation algorithm more efficient, thereby improving predictive performance. In this way, features ultimately extracted through the repetition of convolution layers and pooling layers may be used for training and prediction of a compressed model in which classification models such as multilayer perceptrons (MLPs) and support vector machines (SVMs) are combined in the form of fully connected layers. Meanwhile, an AI-based question generation model may be an AI model trained on the basis of deep learning, and may also be, for example, a model trained using a CNN. In addition, the AI-based question generation model may include at least one algorithm among natural language processing (NLP), random forest (RF), SVC, extra gradient boost (XGB), decision tree (DC), K-nearest neighbors (KNN), Gaussian naïve Bayes (GNB), stochastic gradient descent (SGD), linear discriminant analysis (LDA), ridge, lasso, and elastic net algorithms.

The DB server 126 may manage various user information, purchase history information, etc., stored in a DB.

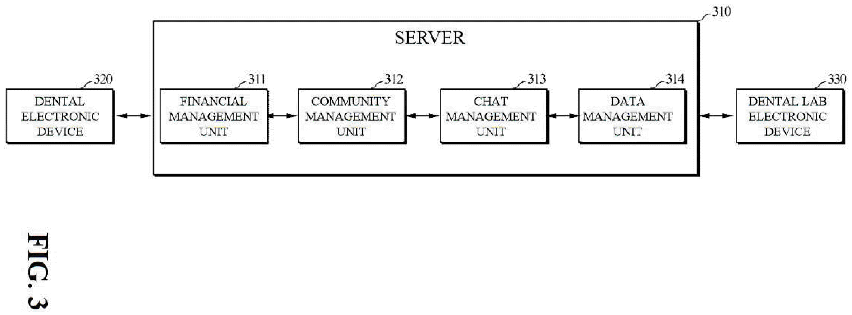

FIG. 3 is a block diagram illustrating exemplary functions of a server according to the present disclosure.

Referring to FIG. 3, a server 310 may correspond to the server 120 of FIGS. 1 and 2. The server 310 may communicate with an electronic device (e.g., the first electronic device 110) used in a dental clinic 320 and an electronic device (e.g., the second electronic device 130) used in a dental laboratory 330. The server 310 may include a financial management unit 311, a community management unit 312, a chat management unit 313, and a data management unit 314.

The financial management unit 311 may interoperate with bank accounts, credit cards, HomeTax, and the like. The financial management unit 311 may manage costs such as equipment rental costs, depreciations, labor costs, rents, utility bills, material costs, supply costs, and the like. The financial management unit 311 may manage revenue. The financial management unit 311 may perform revenue and/or cost analyses such as revenue trends by business partner, major cost trends, the generation of trend charts, and the like. The financial management unit 311 may manage financial performance. The financial management unit 311 may manage employee-related matters such as salaries, severance pays, and the like.

The community management unit 312 may provide news feeds such as posts featuring content from dental laboratories and the like. The community management unit 312 may run its own chatbot system. The community management unit 312 may connect the dental clinic with the dental laboratory to enable a new business deal therebetween and may run a job matching platform.

The chat management unit 313 may run a chat between electronic devices. The chat management unit 313 may generate business partner-specific menus and generate prescriptions and patient-specific chat rooms.

The data management unit 314 may provide a log-in page, a subscription page, a payment guidance page, etc., to a user. When the user logs in, the data management unit 314 may provide an application program that fixes the prescription and intraoral scan image at the top of a screen with a structure which includes a dashboard (total sales, a month-over-month sales growth rate, current settlement status by dental clinic, current OCR accuracy status, a discount coupon provided when accuracy is maintained over a certain period, etc.), a calendar (display of patient-specific appointment dates/deadlines, etc.), prescription upload (OCR, etc., of a prescription file), order management (prescription charts, electronic prescription charts, prescription chart modification, Excel, etc.), business partner/prosthesis management (registration of basic prostheses for sale, registration of business partners (dental clinics, dental laboratories, etc.), registration of prostheses sold by each business partner, etc.), settlement management (checking sales by business partner, checking current payment status by business partner, viewing accounts receivable, issuing settlement statements by business partner, issuing and sending settlement statements by business partner and period, issuing an order list for a corresponding period, etc.), creating business partner-specific menus, creating prescriptions and patient-specific chat rooms, and Instagram feed, to include position tags, etc., of parts of conversations and photos where comments are added.

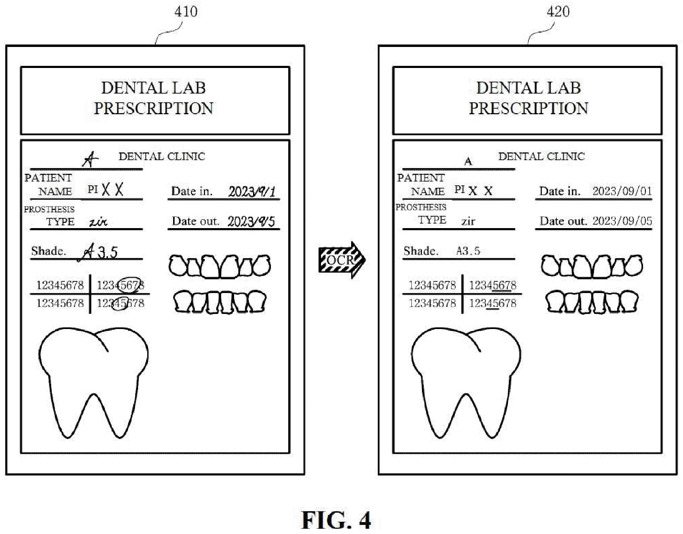

FIG. 4 is a view illustrating an embodiment of generating a digital dental lab prescription of the present disclosure. The digital dental lab prescription of the present disclosure includes a digital document file obtained by inserting digitally recognized characters into a predefined document format and dental lab prescription input data which is a set of information extracted from a written dental lab prescription. Therefore, generating a digital dental lab prescription should be understood as both the generation of a digitally converted document file and the generation of a digital dataset.

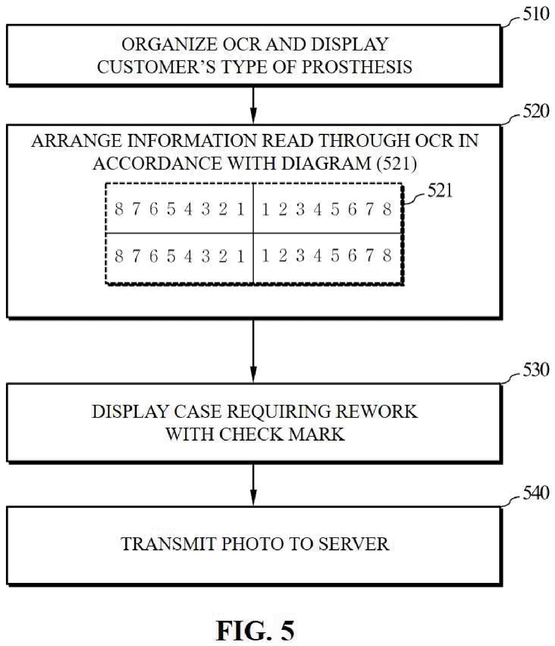

Referring to FIG. 4, a dental lab prescription 410 may include characters and figures such as a hospital name, a dental lab item, a patient's name, age, and gender, a date of receipt, a date of completion, a shade, an image of the patient's teeth, and the like. The characters may include letters and numbers. The characters, figures, etc., of the dental lab prescription 410 may be recognized through OCR. An OCR-processed digital dental lab prescription 420 may be generated. The digital dental lab prescription 420 may include the hospital name, the patient's name, a prosthesis type, the shade, the date of receipt, the date of completion, and tooth position numbers indicating the positions of teeth, and the like. Based on what is shown in FIG. 4, top-right tooth position numbers sequentially indicate a target patient's upper right teeth, bottom-right tooth position numbers sequentially indicate the target patient's bottom-right teeth, top-left tooth position numbers sequentially indicate the target patient's top-left teeth, and bottom-left tooth position numbers sequentially indicate the target patient's bottom-left teeth. FIG. 5 is a diagram illustrating OCR of an application program according to an embodiment of the present disclosure.

Referring to FIG. 5, the server 120 may organize OCR and display a customer's prosthesis type (510). For example, the server 120 may organize recognized OCR on the basis of a "categorization-material name" list of "prosthesis management window" registered in a "settlement management page" and display the customer's prosthesis type.

The server 120 may use several prostheses per person. In this case, two or more prosthesis types may be included in the digital dental lab prescription 420. The server 120 may arrange information read through OCR in accordance with a diagram 521 (520). The diagram 521 may be illustrated as shown in FIG. 5. The server 120 may display numbers read through OCR in a bold style at corresponding positions in the diagram 521. When a user clicks on a blurry number, the server 120 may display the number in a bold style in the diagram 521. When the user clicks on a bold number, the server 120 may display the number in a blurry style on the diagram 521. The server 120 may display a case requiring rework with a check mark (530). For example, "RE," " 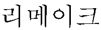 " "remake," etc., may be displayed. When the user clicks on an upload menu in the application program, a photo is transmitted to the server 120 (540), and when the user clicks, the server 120 may display a "prescription upload completion" pop-up window in the application program. When the user clicks, the server 120 may move files displayed in a "confirm files to be uploaded" group to a "prescription group" that the application program is organizing. The button may operate only when a photo is in a "confirm files to be uploaded" space. The server 120 may include an image OCR API and a GPT API. After the photo is stored in the server, the server 120 may extract text using an OCR function. The server 120 uses GPT to organize the text extracted through OCR in accordance with a table of contents, converts the organized text into comma-separated values (CSV) data, and displays the CSV data on an order management screen in a format similar to an Excel spreadsheet, allowing the user to export the data. The server 120 may view the data uploaded by the user. The uploaded data may be converted into a spreadsheet such as an Excel spreadsheet through OCR and the GPT API. When there is an error in the converted content, the error may be corrected using an admin account and reflected to the user.

In an exemplary embodiment, the server 120 may manage the inventory (type and quantity) of materials currently managed by the second electronic device 130. For example, when a certain number of specific dental lab materials or more are requested by the first electronic device 110, the server 120 may compare the remaining inventory level of the second electronic device 130 with the ordered quantity, and when the inventory count of the specific materials is less than or equal to a first threshold value, may provide the second electronic device 130 with a notification indicating that an order is required. According to an exemplary embodiment, when an additional material order is received from the second electronic device 130, the server 130 may send a command to an external device to order the material. Therefore, the dental laboratory which is the user of the second electronic device 130 can easily manage inventory and place orders for items that are running low through the server 120.

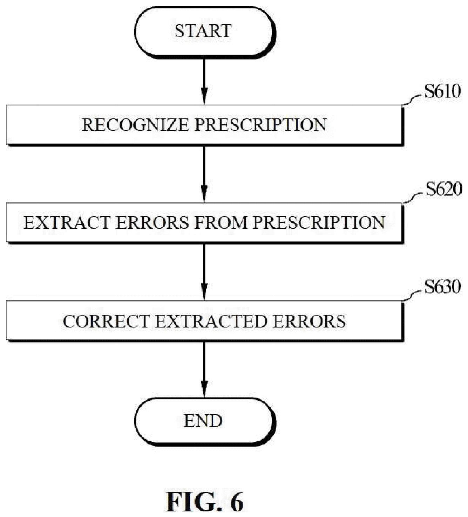

According to an exemplary embodiment, the server 120 may calculate and manage the average inventory levels of each of a plurality of second electronic devices 130 and manage the average material ordering trends of each of a plurality of first electronic devices 110. For example, when it is determined that the first electronic device 110 tends to order a specific material in greater quantities than other dental hospitals and clinics, the server 120 may provide the second electronic device 130 with a special notification indicating that an order is required when the inventory level of the specific material managed by the second electronic device 130 is less than or equal to a second threshold value which is higher than the first threshold value. In this way, even when a projected inventory level managed by the second electronic device 130 is higher than the first threshold value and thus is determined to be in a normal state, the server 120 can prevent stock shortages of the second electronic device 130 through dynamic inventory management based on the material ordering trend of the first electronic device 110. FIG. 6 is a diagram illustrating OCR of an application program according to another embodiment of the present disclosure.

Referring to FIG. 6, a prescription recognition operation is performed in step S610. In this step, OCR is performed on the same prescription a plurality of times to acquire a plurality of pieces of OCR data.

Step S610 may be referred to as an input data processing step. Aligned multiple OCR output characters, character XY-coordinates, character OCR confidence scores, position IDs (word order), etc., may be acquired. In this way, the first electronic device 110 can recognize letters and numbers on a dental lab prescription even when the dental lab prescription does not conform to a standard format but uses an arbitrary format with not only random positioning but also comments, messages, and handwritten notes written in blank spaces on the document, and can determine context on the basis of the recognized letters and numbers.

In some embodiments related to character OCR confidence scores, confidence scores of OCR data may be calculated, and only OCR data with scores of a specific value or more may be utilized as input data. Confidence scores are values obtained by quantifying the quality of prescription scan images and may be calculated on the basis of various variables such as a ratio of text-recognized areas to areas not recognized as text but recognized as an image within a prescription, resolution, shakes, and the like. Performing OCR a plurality of times can lead to error verification and accuracy improvement.

In step S620, an operation of extracting errors from the prescription is performed. In this step, it is determined whether an error has occurred in each word order included in the OCR data and whether correction is required for each word order. A type of error included in the prescription may include at least one of a first error and a second error. A first error may be an error that occurs during an OCR process. A first error may be extracted by comparatively analyzing a plurality of pieces of OCR data acquired by performing OCR on the same prescription a plurality of times and extracting a different word order. For example, assuming that ground truth is "coping imp, R10," first OCR data is "coplng imp, R10," and the second OCR data is "coping imp, R1O," a first error of the first OCR data "coplng imp, Rl0" may be "l," and a first error of the second OCR data may be "O." A second error may be a clerical error included in the original prescription. A second error may be extracted by comparatively analyzing a term or expression frequently used in the prescription with a prestored DB and extracting a clerical error. Here, the "prestored DB" may contain correct forms of terms and expressions and various examples of clerical errors corresponding thereto. For example, when a correct expression is "R10," a first error may be "RIO" where all the characters are recognized as alphabetical characters, a second error may be "RlO" where a number is recognized as an alphabetical character and vice versa, a third error may be "L(l)/I(i)" which is an error between an upper case of a letter and a lower case of another letter that are similar to each other, and a fourth error may be "p. d/10, lO/a, d" which is an error between characters having similar shapes. Performing OCR a plurality of times can lead to detection of detailed OCR errors.

In step S630, an operation of correcting the extracted errors is performed. In this step, a direction for correcting the extracted errors is set, and correction corresponding thereto is performed. Step S630 may be referred to as an output data processing step. Types of error correction methods may include, for example, no edit (remain), delete, insert, select, generate (replace), and the like. No edit (remain) may involve, when a plurality of pieces of OCR data are identical, determining that the word order does not require correction and maintaining the existing data rather than performing correction to change recognized data. Delete may involve deleting an incorrect character. Insert may involve inserting a missing character. Select may involve selecting and applying the most suitable data among data recognized for a specific word order from a plurality of pieces of OCR data. Generate (replace) may involve deleting an incorrect character and generating and inserting (replacing the incorrect character with) a correct character. Delete, insert, and generate (replace) are applicable to first errors and second errors. Select is applicable to first errors. An example of extracting a first error has been described above. Examples of error correction may be ("c", "no edit"), ("o", "no edit"), ..., ("i", "select 2"), ... ("1", "select 2"), ... ("0", "select 1"), and the like. Performing OCR a plurality of times can lead to the provision of a specific logic for correcting OCR data.

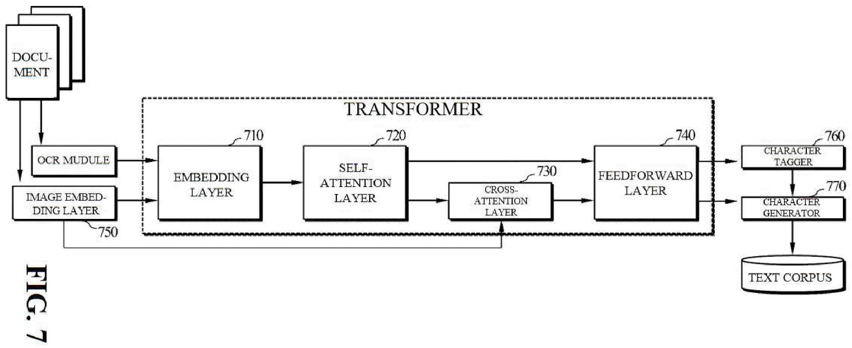

FIG. 7 is a diagram exemplifying an embodiment of the present disclosure in which OCR is implemented using a transformer.

Referring to FIG. 7, an embedding layer 710 may convert each character from each OCR result into a high-density vector, map x and y coordinates to a high-density vector through quantization, quantify an OCR confidence score into a high-density vector, and map all the vectors to a single vector by concatenating the vectors and applying linear projection. A self-attention layer 720 may perform self-attention between vectors. A feedforward layer 730 may be a general feedforward layer of a transformer. A cross-attention layer 740 may perform cross attention using an image embedding as a "key" and a "value." The cross-attention layer 740 is optional and may be omitted depending on tasks and usable resources. An image embedding layer 750 may be a CNN or visual transformer that converts a document image into a series of high-density vectors. The number of visual tokens may be fixed. A character tagger 760 may be a single linear layer that maps a final hidden vector to 5 possible tags. Among the 5 possible tags, character-specific tags may include "no edit" for performing no action or no task, "delete" for deleting characters, "insert" for newly inserting a next character, "select" for selecting one of characters recognized through several OCR processes, and "generate" for deleting a current character and generating a new character. A character generator 770 may be a single linear layer that maps the final hidden vector to a vector of the same size as model vocabulary, and when a predicted tag is "insert" or "generate," the character generator 770 may generate a new character. Since the layer operating on the transformer-based architecture for performing OCR a plurality of times is added, the accuracy of OCR can be improved.

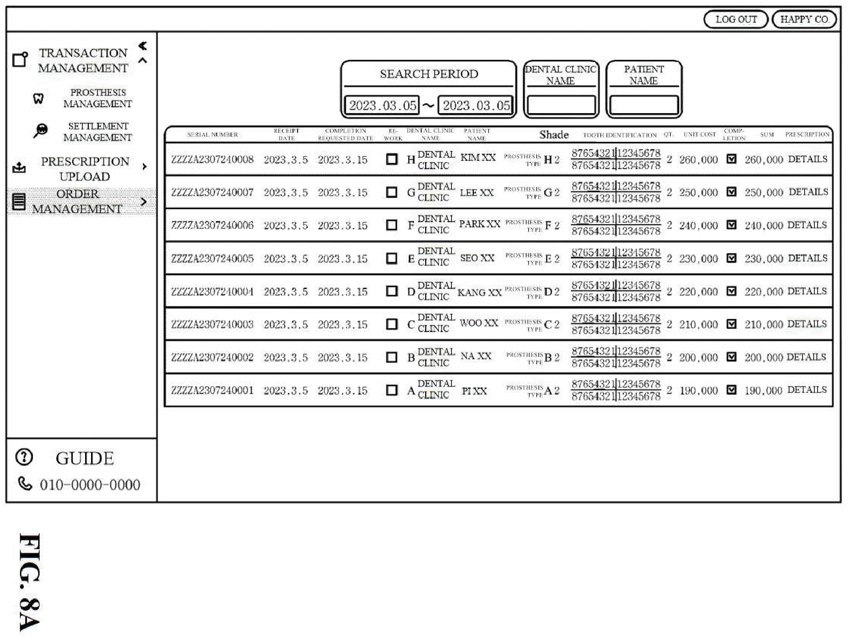

FIGS. 8A, 8B, 9, 10, and 11 are diagrams exemplifying various UIs provided by an application program of the present disclosure.

Referring to FIG. 8A, an application program of the present disclosure may provide an order management menu as one of various functions for a user. The application program of the present disclosure may provide submenus such as prosthesis management, settlement management, etc., as a transaction management menu for ledgers and work logs. Also, the application program of the present disclosure may provide a prescription upload menu, which is a menu for generating an electronic dental lab prescription which is OCR-processed data by uploading a handwritten dental lab prescription. Further, the application program of the present disclosure may provide the order management menu, which is a screen for simply and easily viewing transaction history between dental laboratories and dental clinics, work information, and costs per task in accordance with a search period, a dental clinic name, a patient name, and the like.

Referring to FIG. 8A, the application program of the present disclosure may provide convenient menus such as serial number per order or task, date of receipt, requested date of completion, rework status, name of work-requesting dental clinic, patient name, prosthesis type, prosthesis shade, identification number of each tooth, unit price per quantity, completion status, total amount, detailed prescription view, etc., for various users through the order management menu.

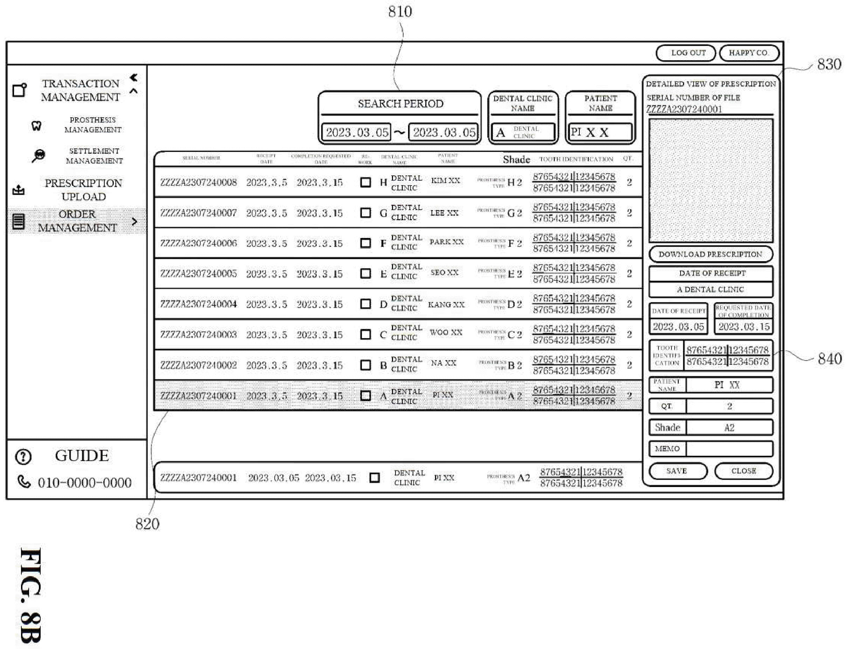

Referring to FIG. 8B, when a user clicks on any one case in the work list, the detailed prescription view menu may be provided to the user in a pop-up window covering a part of the screen. According to an exemplary embodiment, the application program of the present disclosure may provide a date selection function 810 on the screen. When the user clicks, a calendar may be displayed, and a date may be selected. The range of a selectable period may be limited to a maximum of 3 months, but the maximum range is not limited thereto. A default search period may be set to one week but is not limited thereto. Dates may be searched on the basis of the date of receipt. When a specific item is clicked on in a group 820, a detailed prescription view window 830 may be displayed. When the detailed prescription view window 830 is opened, the entire page is moved to the left, and the detailed prescription view window may be placed on the right of the entire page. The user may click on a number in a tooth identification window 840 of the detailed prescription view window 830. Numbers recognized through OCR may be displayed in a bold style at their positions in the tooth identification window 840. When the user clicks on a number displayed in a blurry style in the tooth identification window 840, the number may be displayed in a bold style. When the user clicks on a number displayed in a bold style in the tooth identification window 840, the number may be displayed in a blurry style.

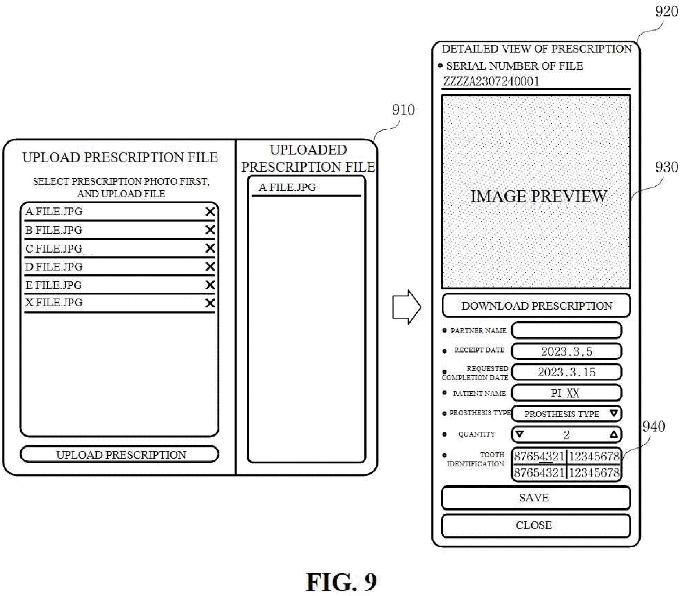

Referring to FIG. 9, when the user clicks on an upload menu in the application program, a photo may be transmitted to the server 120 (910). When the user clicks, the server 120 may display a "prescription upload completion pop-up window" in the application program. When the user clicks, the server 120 may move files displayed in a "pending uploads confirmation" group to a "prescription group" that is being organized by the application program. The button may operate only when a photo is in a space for confirmed files to be uploaded. In a detailed prescription view window 920, a serial number may be generated for one uploaded photo. Just as order numbers are managed in an online store, a regular serial number is generated, enabling a customer service center to rapidly search for the corresponding prescription using the number and respond to a customer inquiry. When a file is uploaded using a prescription photo upload button in an image preview 930, a photo to be uploaded may be displayed in the image preview 930. The user may click on a number in a tooth identification window 940 of the detailed prescription view window 830. Numbers recognized through OCR may be displayed in a bold style at their positions in the tooth identification window 940. When the user clicks on a number displayed in a blurry style in the tooth identification window 940, the number may be displayed in a bold style. When the user clicks on a number displayed in a bold style in the tooth identification window 940, the number may be displayed in a blurry style.

Referring to FIG. 10, the server 120 may provide an incentive UI, for example, a discount rate, in accordance with an OCR rate. As described above, a first OCR error rate may be a ratio of unclearly recognized characters to clearly recognized characters in a digital dental lab prescription. As described above, in an exemplary embodiment, a second OCR error rate may be defined as a value obtained by dividing the difference between a specific error rate, which is a ratio of unclearly recognized characters to clearly recognized characters in a specific digital dental lab prescription, and an average error rate, which is an average of ratios of unclearly recognized characters to clearly recognized characters in the entire set of individual digital dental lab prescription cases input to the first electronic device 110, by the average error rate.

An incentive UI may be executed by the application program and displayed on the first electronic device 110. For example, incentive based on the incentive UI may increase with a reduction in an OCR error rate. The incentive based on the incentive UI may decrease with an increase in an OCR error rate. For example, the incentive may be a discount rate but is not limited thereto. As an example, the discount rate may increase with a reduction in an OCR error rate.

According to an exemplary embodiment, the first electronic device 110 may assign a higher weight value to incentive based on the second OCR error rate than to incentive based on the first OCR error. For example, the incentive based on the incentive UI may increase more as a result of a reduction in the second OCR error rate than as a result of a reduction in the first OCR error rate. The incentive based on the incentive UI may decrease more as a result of an increase in the second OCR error rate than as a result of an increase in the first OCR error rate.

According to an exemplary embodiment, the server 120 may display the discount rate in an incentive UI 1010.

According to an exemplary embodiment, the discount rate displayed in the incentive UI 1010 may be predefined by the user, an administrator, or a platform operator or fixed in accordance with a value previously agreed upon between users (a dental hospital or clinic and a dental laboratory).

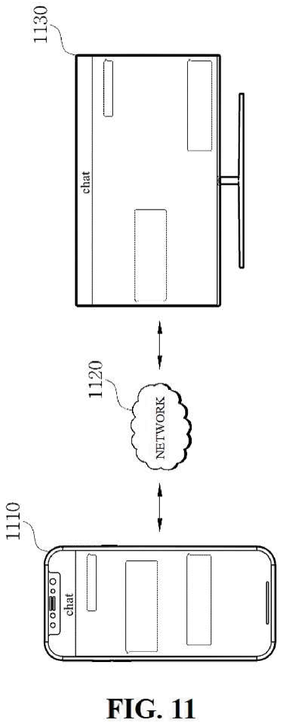

According to an exemplary embodiment, the discount rate displayed in the incentive UI 1010 may be differentially displayed depending on the first error rate and/or the second error rate. For example, the server 120 may display a first discount rate when the first OCR error rate is lower than a first reference value. The server 120 may display a second discount rate which differs from the first discount rate when the second OCR error rate is lower than a second reference value. Since the system according to the present disclosure may provide a discount rate depending on the first OCR error rate and/or the second OCR error rate, the overall OCR rate of the system can be improved by inducing the user of the first electronic device to write a handwritten dental lab prescription trying to increase the OCR rate. Referring to FIG. 11, a dedicated chat room may be created between a specific dental hospital and a dental laboratory such that the specific dental hospital and the dental laboratory may smoothly communicate via the chat room.

According to an exemplary embodiment, a chat room may be created for a hospital, a dental laboratory, and a patient corresponding to the same case. A first user terminal 1110 and a second user terminal 1130 may correspond to the first electronic device 120 and the second electronic device 130 of FIG. 1. The server 120 may generate a dedicated chat room UI in the application program, and the first user terminal 1110 and the second user terminal 1130 may perform chatting via a network 1120. For example, chat room 1 may be generated for hospital A, dental laboratory B, and patient C, chat room 2 may be generated for hospital A, dental laboratory B, and patient D, chat room 3 may be generated for hospital A, dental laboratory X, and patient D, and chat room 4 may be generated for hospital B, dental laboratory X, and patient D. In the case of patient D who has prescriptions given to different dental laboratories by different hospitals, a "patient tooth information export" menu may be generated in the chat room (chat room 2). With the consent of the dental laboratory or hospital, the corresponding information may be shared in other chat rooms (chat rooms 3 and 4). According to a method of obtaining consent and authorization from a corresponding dental laboratory and hospital, a discount and incentive may be provided within a platform when the subsequent prescription is made and accepted, and the "right to request information sharing" may be automatically granted to the corresponding dental laboratory and hospital when dental information of another patient is required.

According to an exemplary embodiment, the first user terminal 1110 and the second user terminal 1130 may transmit and receive various media such as text, images, voice, videos, etc., via the chat room. For example, the first user terminal 1110 may transmit a first image related to a dental lab service request to the second user terminal 1130 via the chat room. The second user terminal 1130 may write text on the first image related to the dental lab service request or insert an object including context such as a note, tagging, free drawing, etc., thereinto and send back a second image in which the text or object is inserted or a related chat message to the first user terminal 1110.

In summary, communication methods in chat rooms may include several methods based on various media such as chatting, images, images created by inserting messages or drawing free objects, and the like.

In response to the text or object, the first user terminal 1110 may send back a third image or chat message in which the text or object is inserted to the second user terminal 1130. In this way, the first user terminal 1110 and the second user terminal 1130 can perform chatting on the basis of context including images via the network 1120 and improve the efficiency of dental lab service requests and feedback through more concise and clear communication using images.

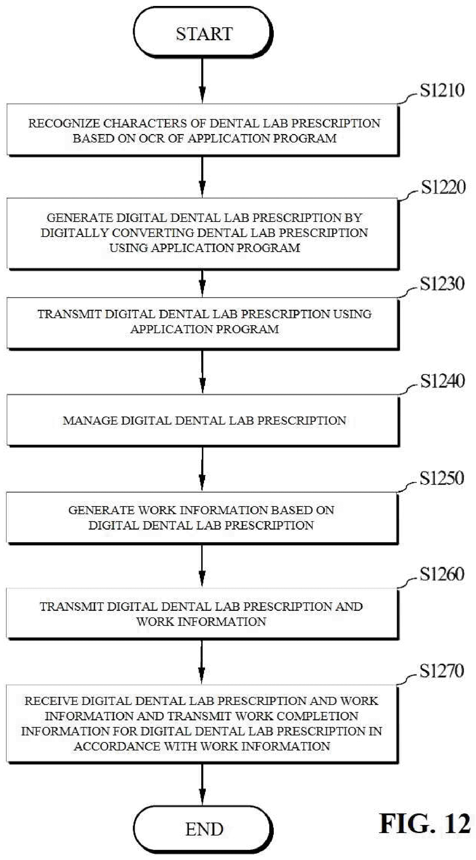

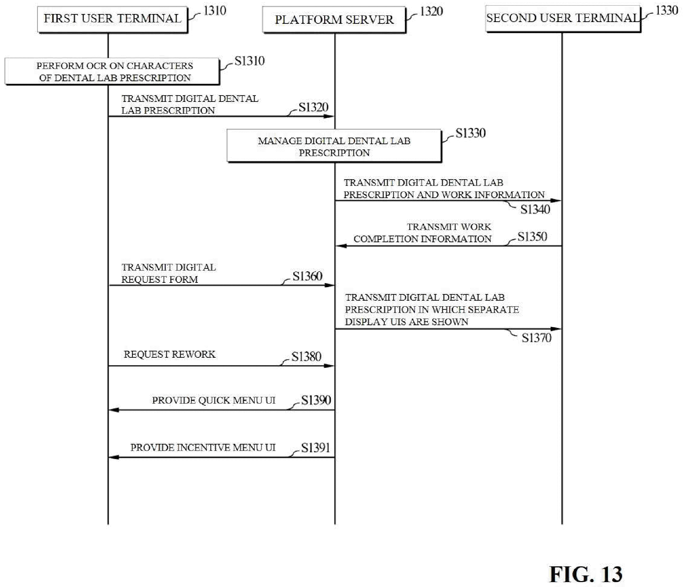

FIG. 12 is a flowchart illustrating a method according to the present disclosure. FIG. 13 is a sequence diagram illustrating a system performing the method according to the present disclosure.

Referring to FIGS. 12 and 13, a step of recognizing characters of a dental lab prescription on the basis of OCR of an application program is performed (S1210). A step of generating a digital dental lab prescription by digitally converting the dental lab prescription through OCR using the application program is performed (S1220). Referring to FIG. 13 as an example, a first user terminal 1310 may perform OCR on the characters of the dental lab prescription (S1310). The first user terminal 1310 may generate the digital dental lab prescription by digitally converting the OCR-processed dental lab prescription. The digital dental lab prescription may include a hospital name, a patient name, a prosthesis type, a shade, and a tooth position number indicating a position of a tooth.

A step of transmitting the digital dental lab prescription using the application program is performed (S1230). Referring to FIG. 13 as an example, the first user terminal 1310 may transmit the digital dental lab prescription to a server 1320 (S1320).

A step of managing the digital dental lab prescription is performed (S1240). A step of generating work information on the basis of the digital dental lab prescription is performed (S1250). Referring to FIG. 13 as an example, the server 120 may manage the digital dental lab prescription such as extracting unclear characters, calculating an OCR error rate, and the like (S1330).

A step of transmitting the digital dental lab prescription and the work information may be performed (S1260). Referring to FIG. 13 as an example, the server 120 may transmit the digital dental lab prescription and the work information to a second user terminal 1330 (S1340).

A step of transmitting work completion information which is a result of performing work for the digital dental lab prescription according to the work information is performed (S1270). Referring to FIG. 13 as an example, the second user terminal 1330 may transmit the work completion information to the server 1320 (S1350).

In some embodiments, the first user terminal 1310 may transmit a digital request form to the server 1320 (S1360). The digital request form may be data representing a prescription that calls for a plurality of prostheses for a single patient. The server 120 may transmit the digital dental lab prescription in which separate display UIs are shown to the second user terminal 1330 (S1370).

In some embodiments, the first user terminal 1310 may request rework from the server 120 (S1380). The server 120 may provide a quick menu UI to the first user terminal 1310 (S1390).

In some embodiments, the server 120 may provide an incentive UI to the first user terminal 1310 on the basis of OCR error rate (S1391).

Meanwhile, the disclosed embodiments may be implemented in the form of a recording medium that stores instructions executable by a computer. The instructions may be stored in the form of program code, and when executed by a processor, the instructions may create a program module to perform operations of the disclosed embodiments. The recording medium may be implemented as a computer-readable recording medium.

The computer-readable recording medium includes all kinds of recording media storing instructions that can be interpreted by a computer. For example, the computer-readable recording medium may be a ROM, a RAM, magnetic tape, a magnetic disk, a flash memory, an optical data storage device, or the like.

The disclosed embodiments have been described with reference to the appended drawings. Those of ordinary skill in the technical field to which the present disclosure pertains should understand that the present disclosure can be implemented in a different form from the disclosed embodiments without changing the technical spirit or essential features of the present disclosure. The disclosed embodiments are illustrative and should not be interpreted as limiting.

## Claims

1. A system comprising:
a first electronic device configured to recognize characters of a dental lab prescription on the basis of optical character recognition (OCR) of an application program, generate a digital dental lab prescription by digitally converting the dental lab prescription through the OCR using the application program, transmit the digital dental lab prescription using the application program, and extract an OCR error by comparatively analyzing which one of the following an original text error of the dental lab prescription corresponds to: a first error type where all the characters are recognized as alphabetical characters, a second error type where a number is recognized as an alphabetical character or vice versa, a third error type between an upper case of an alphabetical character and a lower case of another alphabetical character that are similar to each other, and a fourth type between alphabetical characters having similar shapes;
a server configured to manage the digital dental lab prescription including a hospital name, a patient name, a prosthesis type, a shade, and a tooth position number indicating a position of a tooth, generate work information on the basis of the digital dental lab prescription, and transmit the digital dental lab prescription and the work information; and
a second electronic device configured to receive the digital dental lab prescription and the work information and transmit work completion information for the digital dental lab prescription to the server in accordance with the work information,
wherein the server calculates an OCR error rate on the basis of the digital dental lab prescription and provides an incentive user interface (UI) based on the OCR error rate to the first electronic device, that is, calculates a first OCR error rate which is a ratio of unclearly recognized characters to clearly recognized characters in the digital dental lab prescription and a second OCR error rate which is a value obtained by dividing a difference between a specific error rate which is a first OCR error rate of a specific digital dental lab prescription, and an average error rate which is an average of first OCR error rates of all digital dental lab prescriptions received from the first electronic device, by the average error rate, and displays first incentive based on the first OCR error rate and second incentive based on the second OCR error rate, and
the second incentive based on the second OCR error rate has a larger weight value than the first incentive based on the first OCR error rate.

2. The system of claim 1, wherein the first electronic device recognizes letters and numbers of the dental lab prescription on the basis of character positions in accordance with a standard prescription format provided by the application program.

3. The system of claim 2, wherein the first electronic device recognizes the letters and numbers of the dental lab prescription on the basis of random positions in accordance with an arbitrary prescription format that is not aligned with the standard prescription format.

4. The system of claim 3, wherein the server classifies the characters of the digital dental lab prescription as clear characters and unclear characters using an artificial intelligence (AI) model for recognizing characters, highlights the unclear characters in the digital dental lab prescription, and transmits the highlighted digital dental lab prescription to the first electronic device.

5. The system of claim 4, wherein the first electronic device uploads data about a prescription that requests a plurality of prostheses for a single patient to the application program and transmits the digital dental lab prescription and the uploaded data to the server using the application program, and
the server displays separate display UIs corresponding to each of the plurality of prostheses in the digital dental lab prescription and transmits the digital dental lab prescription in which the separate display UIs are displayed to the second electronic device.

6. The system of claim 5, wherein the first electronic device requests dental lab rework from the server using the application program, and
the server provides a quick menu UI for attachment adjustment to the first electronic device in response to the request for dental lab rework.

7. The system of claim 1, wherein the server provides the second electronic device with a portfolio sharing community UI for dental laboratories to upload their work results to the application program.

8. The system of claim 1, wherein the server generates a dedicated chat room UI enabling communication between the first electronic device and the second electronic device in the application program and provides the dedicated chat room UI to each of the first electronic device and the second electronic device.

9. A method comprising:
recognizing characters of a dental lab prescription on the basis of optical character recognition (OCR) of an application program;
generating a digital dental lab prescription obtained by digitally converting the dental lab prescription through OCR using the application program;
transmitting the digital dental lab prescription using the application program;
managing the digital dental lab prescription including a hospital name, a patient name, a prosthesis type, a shade, and a tooth position number indicating a position of a tooth;
generating work information on the basis of the digital dental lab prescription;
transmitting the digital dental lab prescription and the work information;
transmitting work completion information for the digital dental lab prescription in accordance with the work information; and
calculating an OCR error rate on the basis of the digital dental lab prescription and displaying an incentive user interface (UI) in accordance with the OCR error rate,
wherein the recognizing of the characters of the dental lab prescription comprises extracting an OCR error by comparatively analyzing which one of the following an original text error of the dental lab prescription corresponds to: a first error type where all the characters are recognized as alphabetical characters, a second error type where a number is recognized as an alphabetical character or vice versa, a third error type between an upper case of an alphabetical character and a lower case of another alphabetical character that are similar to each other, and a fourth type between alphabetical characters having similar shapes,
the providing of the incentive UI comprises calculating a first OCR error rate which is a ratio of unclearly recognized characters to clearly recognized characters in the digital dental lab prescription and a second OCR error rate which is a value obtained by dividing a difference between a specific error rate which is a first OCR error rate of a specific digital dental lab prescription, and an average error rate which is an average of first OCR error rates of all digital dental lab prescriptions, by the average error rate, and
second incentive based on the second OCR error rate has a larger weight value than first incentive based on the first OCR error rate.
